# EUROPÄISCHE PATENTSCHRIFT

(11) **EP 0 981 471 B1**
(45) Veröffentlichungstag und Bekanntmachung des Hinweises auf die Patenterteilung: **23.04.2003**
(21) Anmeldenummer: 98961049.8
(22) Anmeldetag: 27.10.1998
(51) Int. Cl.: B60T 8/36, F15B 13/00, F16L 55/10, B21K 21/12

(54) **GEHÄUSEBLOCK**
HOUSING BLOCK
BLOC-CARTER

(30) Priorität: 29.01.1998 DE 19803366
(43) Veröffentlichungstag der Anmeldung: 01.03.2000
(73) Patentinhaber: ROBERT BOSCH GMBH, 70442 Stuttgart (DE)
(72) Erfinder: HÜBER, Hubert, D-87480 Weitnau (DE); RÖSCH, Arne, CEP-13001 Campinas, SP (BR); WOLF, Markus, D-87437 Kempten (DE)
(86) Internationale Anmeldenummer: DE9803136
(87) Internationale Veröffentlichungsnummer: WO99038739

(56) Entgegenhaltungen:
- EP-A- 0 000 943
- EP-A- 0 764 481
- WO-A-91/17383
- WO-A-97/12790
- DE-A- 19 602 360
- DE-B- 1 300 800

## Beschreibung

### Stand der Technik

Die Erfindung geht aus von einem Gehäuseblock der Gattung des Hauptanspruchs.

Durch die Druckschrift WO 97/12790 ist ein gattungsgemäßer Gehäuseblock bekannt für ein hydraulisches Aggregat einer Fahrzeugbremsanlage. Der Gehäuseblock weist Bohrungen zur Aufnahme von hydraulischen Ventilen, Pumpenelementen und Speicherkolben sowie Anschlußbohrungen für hydraulische Bremsleitungen und innerhalb des Gehäuseblocks hydraulische Kanäle zur Verschaltung der hydraulischen Ventile wenigstens mit den Anschlußbohrungen auf, wobei die Kanäle nach außen verschlossen sind. Die Kanäle werden hergestellt durch Bohren von Löchern ausgehend von wenigstens einer Gehäuseblockseite und durch Einsetzen von Verschluß in die Anfänge solcher Löcher, so daß diese Verschlüsse aufweisen. Dabei sind die Verschlußteile wahlweise ausgebildet in Form von einpreßbaren Kugeln, besonders geformten Stöpseln oder aus Blech geformten Verschlußkappen. Zur Lagefixierung der Verschlußteile, die einer hohen hydraulischen Beaufschlagung ausgesetzt sein können, schlägt die Druckschrift vor, aus dem Werkstoff des Gehäuseblockes gegen die Verschlußteile gerichtete Verstemmwülste zu formen. Die Verstemmwülste können dabei zusätzlich als Dichtelemente dienen.

Des weiteren ist aus der DE 13 00 800 B eine Vorrichtung und damit implizit ein Verfahren zum Verankern von Ventilsitzringen in Zylinderköpfen bekannt, bei dem eine Drehvorrichtung mit Druckrolle eingesetzt wird. Bei dieser Vorrichtung handelt es sich um ein Taumelwerkzeug durch das Material des Zylinderkopfes sowohl längs eines Kanals, in dessen Endbereich ein Ventilsitzring angeordnet ist, als auch radial einwärts zur Längsachse dieses Kanals verdrängt wird. Dabei wird von der Vorrichtung eine Fläche überrollt, die sich radial über den Durchmesser des Kanals hinaus erstreckt, ohne dass jedoch der offene (Nenn-)querschnitt des Kanals abgedeckt oder abdichtend verschlossen wird.

### Vorteile der Erfindung

Der Gehäuseblock, der insbesondere in einer hydraulischen Fahrzeugbremsanlage verwendbar ist, mit den kennzeichnenden Merkmalen des Anspruchs 1 hat den Vorteil, dass der Aurwand für das Beschaffen und Einsetzen und gegebenenfalls Einpressen von Verschlusstücken wie Kugeln, Stöpseln, Deckeln oder dergleichen eingespart wird. Demgemäss entfällt die seither notwendige Lagerhaltung, der Aufwand für Vereinzelungs-, Transport- und Montagevorrichtungen.

Die kennzeichnenden Merkmale des Anspruchs 2 geben ein preisgünstiges Verfahren zum Herstellen des Gehäuseblockes gemäß dem Anspruch 1 an, wobei verfahrensbedingt im Vergleich zum Presskraftaufwand für einen Presstempel schon geringere Kräfte ausreichen für das Eindringen des Taumelwerkzeugs in den Gehäuseblock und dem dabei erfolgenden Herstellen des Verschlusses.

### Zeichnung

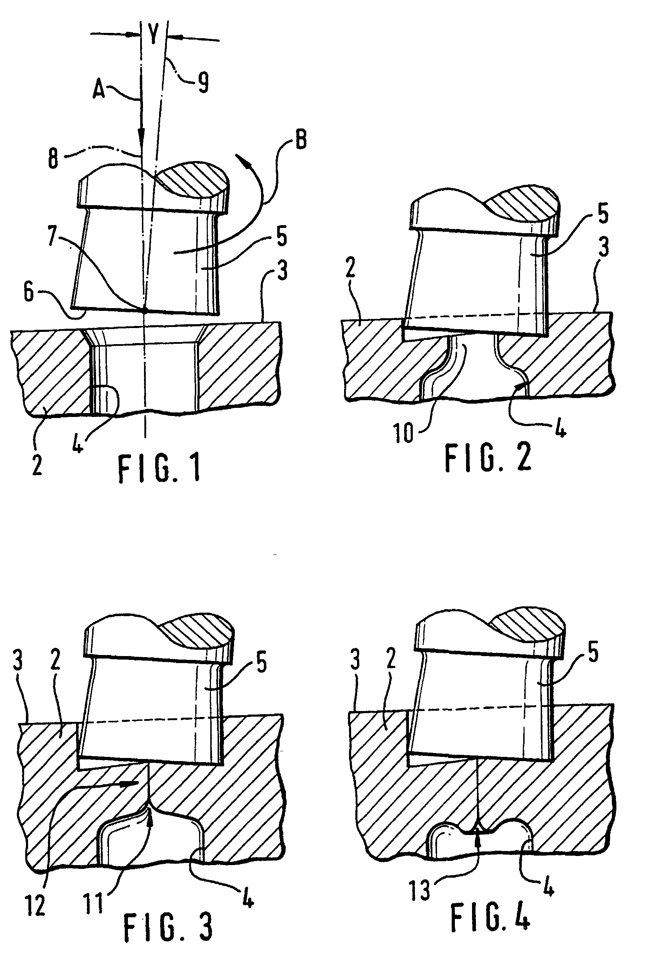

Ein Ausschnitt aus einem Gehäuseblock mit einem erfindungsgemäßen Verschluss ist in der Zeichnung im Längsschnitt dargestellt. Es zeigen die Figuren 1 bis 4 einen Ausschnitt aus dem Gehäuseblock und die Figuren 2,3 und 4 verschiedene Herstellungsstadien des zur Erfindung gehörenden Verschlusses.

### Beschreibung des Ausführungsbeispiels

Ein Ausschnitt aus einem Gehäuseblock 2 ist in der Figur 1 dargestellt im Längsschnitt. Dabei weist der Gehäuseblock 2 eine Gehäuseblockseite 3 auf, von der ausgehend und dabei beispielsweise rechtwinklig ausgerichtet ein gebohrtes Loch 4 angeordnet ist.

Gemäß dem ausgesuchten Verfahren zum Herstellen des Gehäuseblockes 2 ist ein Taumelwerkzeug 5 vorgesehen. Dieses hat eine gegen die Gehäuseblockseite 3 gerichtete Stirnseite 6. Im vorliegenden Ausführungsbeispiel ist die Stirnseite 6 ebenflächig ausgebildet, kreisrund und hat eine Mitte 7. Eine nicht dargestellte Taumelvorrichtung, die auf dem Werkzeugmaschinenmarkt käuflich ist, nimmt das Taumelwerkzeug 5 auf und bewegt es auf einer Zuführungsbahn A gegen den Gehäuseblock 2. Im Ausführungsbeispiel fällt die Bewegungsbahn A zusammen mit einer Längsachse 8 des gebohrten Loches 4. Eine Längsachse 9 des Taumelwerkzeuges 5 ist zur Bewegungsbahn A um einen Winkel Y geneigt. Beispielsweise entspricht die Größe des Winkels Y einem solchen Winkel, wie er in einer handelsüblichen Taumelvorrichtung fix oder verstellbar vorgesehen ist. Wie schon der Name sagt, ist die Taumelvorrichtung dazu bestimmt, dem Taumelwerkzeug 5 eine Taumelbewegung aufzuzwingen, die durch den genannten Winkel Y und des weiteren durch den gekrümmten Pfeil B, der eine Umlaufbahn anzeigt, bestimmt ist. Dem Prinzip nach bewegen sich also hier im Beispiel außer der Mitte 7 alle Zonen des Taumelwerkzeugs 5 auf Taumelbahnen. Die angegebene Längsachse 9 des Taumelwerkzeuges 5 beschreibt dabei ausgehend von der Mitte 7 einen spitzwinkligen Kegelmantel.

Die nicht dargestellte Taumelvorrichtung selbst oder eine nicht dargestellte Presse, an die die Taumelvorrichtung angebaut ist, bewegt entlang der Bewegungsbahn A das Taumelwerkzeug 5 in taumelndem Zustand in den Gehäuseblock 2 hinein, was in der Figur 2 dargestellt ist. Dadurch wird ausgehend von der Gehäuseblockseite 3 Werkstoff des Gehäuseblocks 2 fortlaufend vor dem Taumelwerkzeug 5 verdrängt. Damit dieser Verdrängungsvorgang als ein Fließvorgang abläuft, ist der Gehäuseblock 2 aus einem duktilen Werkstoff hergestellt. Beispielsweise ist der duktile Werkstoff eine Aluminiumknetlegierung. Wie in der Figur 2 erkennbar ist, bewirkt ein solcher Fließvorgang eine Verlagerung von Gehäuseblockwerkstoff sowohl längs der Längsachse 8 des gebohrten Loches als auch radial einwärts. Dadurch ergibt sich zwischen dem gebohrten Loch 4 und dabei angrenzend an die Stirnseite 6 des Taumelwerkzeugs 5 eine gegenüber dem Durchmesser des gebohrten Loches 4 verengte Öffnung 10. Je tiefer das Taumelwerkzeug 5 in den Gehäuseblock 2 eingetaumelt wird, desto enger wird die Öffnung 10.

Schließlich wird durch weiteres Bewegen auf der Bewegungsbahn A die Öffnung verschlossen, weil Gehäuseblockwerkstoff im wesentlichen längs der Längsachse A des gebohrten Loches 4 radial aufeinander trifft, was in der Figur 3 dargestellt ist. Dort ist anstelle der Öffnung 10 gemäß der Figur 2 die Berührungslinie 11 des Gehäuseblockwerkstoffes dargestellt. Im Bereich dieser Berührungslinie 11 bildet der Gehäuseblockwerkstoff einen erfindungsgemäß gewollten Verschluß 12. Dieser Verschluß 12 verschließt das gebohrte Loch 4 relativ zur Gehäuseblockseite 3 und demgemäß zur Umgebung. Dadurch ist das gebohrte Loch 4 als ein nach außen verschlossener hydraulischer Kanal benützbar.

Wie unter anderem aus der Druckschrift WO 97/12790 hervorgeht, kann das gebohrte Loch 4 bzw. der hydraulische Kanal eine Kolbenpumpe mit einem elektromagnetisch steuerbaren Ventil bzw. mit dessen Einbaustufenbohrung verbinden. Dabei kann dieser Kanal aber auch durch diese Stufenbohrung hindurch die Kolbenpumpe mit einer Anschlußbohrung, die zum Anschließen einer Bremsleitung an dem Gehäuseblock vorgesehen ist, verbinden. Die Verwendung des erfindungsgemäß hergestellten Verschlusses 12 ist aber nicht auf das soeben beschriebene Ausführungsbeispiel beschränkt. Beispielsweise könnte man das gebohrte Loch 4 vollständig durch den nur teilweise dargestellten Gehäuseblock 2 hindurch bohren und beispielsweise beidendig des dieserart gebohrten Loches 4 Verschlüsse 12 anordnen. Erkennbar ist, ein den Gehäuseblock 2 konstruierender Fachmann an den von ihm als notwendig erachteten Stellen den erfindungsgemäßen Verschluß 12 anordnen kann. Dabei spielt es dann, wenn man wieder von der WO 97/12790 ausgeht, keine Rolle, ob das gebohrte Loch 4 beispielsweise in Form einer Stufenbohrung ausgebildet ist, so daß nicht nur eine Kommunikation von hydraulischen Komponenten untereinander zustandekommt, sondern auch ein Aufnahmeraum für hydraulisches Druckmittel im Sinne einer Bereitstellung einer hydraulischen Dämpferkammer.

Es ist aber nicht unbedingt notwendig, das Loch 4 zu bohren. Vielmehr kann man bei der Herstellung des Loches 4 auch von der Fließtechnik Gebrauch machen, beispielsweise unter Verwendung eines Lochdornes. Insbesondere dann, wenn der Gehäuseblock 2 als ein Schmiedeteil ausgebildet ist.

In der Figur 3 ist ein Übergang *von* dem Loch 4 zu der Berührungslinie 11 im wesentlichen stumpfkegelig geformt. Wenn man gemäß der Figur 4 das Taumelwerkzeug 5 noch tiefer in den Gehäuseblock 2 eintaumelt, so wird natürlich mehr Gehäusewerkstoff in das Loch 4 gedrängt, wodurch durch ein Fortschreiten des Fließvorganges im Bereich der Berührungslinie 11 und dabei in das Loch 4 hinein eine Aufklaffung 13 entstehen kann. Das Herstellen einer solchen Aufklaffung 13 ist an sich überflüssig und verlängert in nachteiliger Weise die Zeitdauer, die das Taumelwerkzeug 5 im Gehäuseblock 2 verbringt. Aus dem Unterschied zwischen den beiden Figuren 3 und 4 ergibt sich für den Fachmann, daß er durch Versuche ermitteln kann, wie weit bei einem bestimmten ausgewählten Gehäusewerkstoff das Taumelwerkzeug 5 in den Gehäuseblock 2 hineinzudrücken ist. Je nach Art des Werkstoffes kann dies für ein und denselben Durchmesser eines Loches 4 unterschiedlich sein. Beim Ermitteln der für einen dichten Verschluß 12 notwendigen Eindringtiefe für das Taumelwerkzeug 5 kann der Fachmann auch experimentieren mit einem Taumelwerkzeug, dessen Stirnseite abweichend von den Darstellungen gemäß den Figuren 1 bis 4 nicht eben, sondern uneben ausgebildet ist.

Ergänzend wird noch darauf hingewiesen, daß der erfindungsgemäße Verschluß 12 auch anbringbar ist an solchen Gehäuseblöcken, die nicht Bestandteile von Fahrzeugbremsanlagen sind. Ein solcher Gehäuseblock kann beispielsweise Bestandteil der Hydraulik einer Werkzeugmaschine, eines Aufzuges oder einer anderen Art von Fördereinrichtung sein.

## Patentansprüche

1. Gehäuseblock (2) mit Bohrungen mit wenigstens einem hydraulischen Kanal innerhalb des Gehäuseblocks (2), wobei der hydraulische Kanal innerhalb eines Loches (4) verläuft, das von einer Gehäuseblockseite (3) ausgeht und dem im Bereich der Gehäuseblockseite (3) ein dichter Verschluss (12) zugeordnet ist, **dadurch gekennzeichnet, dass** der Gehäuseblock (2) aus einem duktilen Werkstoff besteht und dass ausgehend von dieser Gehäuseblockseite (3) ein Volumen des Werkstoffs des Gehäuseblocks (2) sowohl längs des Loches (4) als auch radial einwärts relativ zur Längsachse (8) des Loches (4) und dabei den Querschnitt des Loches (4) abdeckend und abdichtend fließverformt ist.

2. Verfahren, wobei ein Gehäuseblock (2) nach Anspruch 1 hergestellt wird, **dadurch gekennzeichnet, dass** das Fließformen des duktilen Werkstoffs des Gehäuseblockes (2) durchgeführt wird mittels eines Taumelwerkzeugs (5) mit einer gegen den Gehäuseblock (2) gerichteten Stirnseite (6), die beim Taumeln eine Fläche überrollt, die sich radial über den Durchmesser des Loches (4) hinaus erstreckt.

## Claims

1. Housing block (2) having bores, with at least one hydraulic duct within the housing block (2), the hydraulic duct running within a hole (4) which emanates from one housing-block side (3) and is assigned a leaktight closure (12) in the region of the housing-block side (3), **characterized in that** the housing block (2) consists of a ductile material, and **in that**, starting from this housing-block side (3), a volume of the material of the housing block (2) is flow-formed both along the hole (4) and radially inwards in relation to the longitudinal axis (8) of the hole (4) and at the same time so as to cover and seal off the cross section of the hole (4).

2. Method whereby a housing block (2) according to Claim 1 is produced, **characterized in that** the flow-forming of the ductile material of the housing block (2) is carried out by means of a tumbling tool (5) having an end face (6) which is directed towards the housing block (2) and, during tumbling, rolls over a face which extends radially beyond the diameter of the hole (4).

## Revendications

1. Bloc de carter (2) avec des perçages avec au moins un canal hydraulique à l'intérieur du bloc de carter (2), le canal hydraulique s'étendant à l'intérieur d'un trou (4) qui part d'un côté du bloc de carter (3) et auquel est associé une fermeture (12) étanche dans la zone du côté de bloc de carter (3),
**caractérisé en ce que**
le bloc de carter (2) est en un matériau ductile et à partir de ce côté de bloc de carter (3) un volume du matériau du bloc de carter (2) est déformé par fluage aussi bien le long du trou (4) que radialement vers l'intérieur par rapport à l'axe longitudinal (8) du trou (4) et donc couvre et rend étanche la section transversale du trou (4).

2. Procédé selon lequel on fabrique un bloc de carter (2) selon la revendication 1,
**caractérisé en ce que**
le formage par fluage du matériau ductile du bloc de carter (2) est réalisé au moyen d'un outil de nutation (5) avec un côté frontal (6), orienté vers le bloc de carter (2), qui lors de la nutation force par rotation une surface qui s'étend radialement vers l'extérieur sur tout le diamètre du trou (4).
